# EUROPÄISCHE PATENTSCHRIFT

(11) **EP 3 557 977 B1**
(45) Veröffentlichungstag und Bekanntmachung des Hinweises auf die Patenterteilung: **07.07.2021**
(21) Anmeldenummer: 17825797.8
(22) Anmeldetag: 15.12.2017
(51) Int. Cl.: A01G 23/04

(54) **WURZELBALLEN-UNTERSCHNEIDE- UND AUSHEBEGERÄT**
DEVICE FOR UNDERCUTTING AND REMOVING ROOT BALLS
APPAREIL DE COUPE SOUS-JACENTE DE MOTTES RACINAIRES ET DE DÉTERRAGE

(30) Priorität: 21.12.2016 DE 102016225917
(43) Veröffentlichungstag der Anmeldung: 30.10.2019
(73) Patentinhaber: Elsen, Freddy, 25421 Pinneberg (DE)
(72) Erfinder: Elsen, Freddy, 25421 Pinneberg (DE)
(74) Vertreter: Müller Verweyen
(86) Internationale Anmeldenummer: PCT/EP2017/082993
(87) Internationale Veröffentlichungsnummer: WO 2018/114652

(56) Entgegenhaltungen:
- EP-A1- 2 014 153
- CN-B- 104 126 483
- DE-A1- 3 943 053
- GB-A- 1 574 103

## Beschreibung

Die vorliegende Erfindung betrifft ein Wurzelballen-Unterschneide- und Aushebegerät zum Unterschneiden und Ausheben von Pflanzen mit Wurzelballen mit wenigstens einem Unterschneidemesser, das schwenkbar um wenigstens zwei horizontale Achsen gelagert ist.

Die Erfindung betrifft weiterhin ein Verfahren, insbesondere für Baumschulen, im Landschafts- und Gartenbau sowie in der Forstwirtschaft zum Unterschneiden und Ausheben von Pflanzen mit Wurzelballen verschiedenen Volumens, wobei eine zumindest halbautomatische Einstellung der Unterschneidemesser vorgesehen ist.

Bei bekannten Wurzelballen-Unterschneide- und Aushebegeräten, auch Ballenschneider genannt, sind die Unterschneidemesser stets so dimensioniert, dass die maximale Leistungsfähigkeit des Gerätes ausgenutzt werden kann. Diese Geräte sind entsprechend groß und schwer, was wiederum ein großes Trägerfahrzeug erfordert. Aufgrund der Baugröße müssen zwischen den Bäumen, Koniferen oder Sträuchern große Abstände berücksichtigt werden, was zu einem größeren Flächenbedarf führt, was betriebswirtschaftlich nachteilig ist. Auch ein Bereithalten von Geräten unterschiedlicher Baugröße mit ggf. auswechselbaren Formatteilen bedeutet stets einen erheblichen Kosten- und/oder Umrüstaufwand.

In der Offenlegungsschrift DE 43 01 513 A1 wird ein Einzelballen-Aushebe- und Rodegerät beschrieben, das als Anhänger ausgebildet ist oder an einen Auslegerarm eines Anbaubaggerladers angebaut werden kann. Das Gerät weist ein Unterschneidemesser auf, das zum Herausschneiden des Ballens mittels einer zentralen Doppelgelenkdrehverbindung positionierbar ist. Neben der Doppelgelenkdrehverbindung sind hierfür wenigstens drei Hubzylinder erforderlich, so dass das Gerät in seiner Konstruktion sehr aufwendig und störanfällig ist.

Die DE 100 01 078 C1 zeigt eine Vorrichtung zum Verpflanzen von Bäumen oder Sträuchern, welche zwei gegeneinander verstellbare Spaten aufweist. Diese Spaten sind zwischen einer offenen Lage und einer geschlossenen Lage mittels Stellantrieben verstellbar. In der offenen Lage sind die Spaten um einen Abstand voneinander entfernt, der mindestens dem Durchmesser des zu verpflanzenden Baumes oder Strauches entspricht. In der geschlossenen Lage ergänzen sich die Spaten zu einer Teilkugelschale. Um einen geringen Widerstand des Spatens beim Eindringen in den Boden zu erzielen, ist die Schneide des Spatens in Form eines Wellenschliffes ausgebildet. Die dort gezeigte Vorrichtung ist zwar sehr robust aber hinsichtlich der Größe eines auszuhebenden Ballens nicht einstellbar.

Die US-Patentschrift US 5 081 941 offenbart einen Ballenstecher, welcher auch als Spatenmaschine bezeichnet wird. Die dort offenbarte Spatenmaschine umfasst vier an Linearführungen gehalterte Spaten, welche unter einem Winkel in das Erdreich einstechen. Für unterschiedliche Ballengrößen sind dort austauschbare Spatenblätter vorgesehen, dies bedeutet, dass stets vier Spatenblätter auszutauschen sind. Die Spatenblätter sind zur Verwendung als Unterschneidemesser ungeeignet, da Führungsschienen auf der Rückseite den Widerstand im Erdreich erheblich vergrößern.

Aus der DE 39 43 053 A1 ist ein Einzelballen-Unterschneide- und Aushebegerät bekannt, welches als Nachlaufgerät für einen Ackerschlepper ausgebildet ist. Das dort gezeigte Einzelballen-Unterschneide- und Aushebegerät weist zwei schmale gerade, sich überlappende Unterschneidemesser auf, die um eine gemeinsame Achse schwenkbar gelagert sind. Diese Vorrichtung ist hinsichtlich der Größe eines auszuhebenden Ballens nur sehr begrenzt einstellbar. Auch ist die Kraftwirkungsrichtung quer zur Fahrtrichtung ungünstig. Ferner können die flachen geraden Messer leicht verbiegen und sich aufgrund der Überlappung gegenseitig blockieren.

Ausgehend von diesem Stand der Technik ist es Aufgabe der vorliegenden Erfindung, ein Wurzelballen-Unterschneide- und Aushebegerät bereitzustellen, das universell für unterschiedlich große und unterschiedlich geformte Wurzelballen einsetzbar und dabei schnell und einfach auf eine abweichende Ballengröße und/oder Ballenform einstellbar ist sowie an verschiedene Trägerfahrzeuge adaptierbar ist.

Es ist damit einhergehend die Aufgabe der Erfindung, ein Verfahren zur Anwendung eines Wurzelballen-Unterschneide- und Aushebegeräts in Baumschulen, im Landschafts- und Gartenbau sowie in der Forstwirtschaft bereitzustellen, welches ein schnelles und einfaches Einstellen auf ein optimales Ballenvolumen und/oder auf verschiedene Ballenformen unterstützt, wobei das Einstellen bevorzugt werkzeugfrei und im Wesentlichen automatisch durchgeführt wird.

Die Aufgabe wird gemäß der vorliegenden Erfindung gelöst durch ein Wurzelballen-Unterschneide- und Aushebegerät mit wenigstens einem Unterschneidemesser, das schwenkbar um eine erste Schwenkachse A, A' in einer Schwenklageraufnahme gelagert ist, wobei die Position der Schwenklageraufnahme veränderbar ist, wobei das Unterschneidemesser benachbart zur Schwenklageraufnahme um eine zweite Schwenkachse B, B' schwenkbar gelagert ist, wobei die zweite Schwenkachse B, B' quer zur ersten Schwenkachse A, A' verläuft. Die erste Schwenkachse A, A' und die zweite Schwenkachse B, B' liegen jeweils in einer horizontalen Ebene, vorzugsweise in einer gemeinsamen horizontalen Ebene, wodurch eine besonders einfache Konstruktion gegeben ist.

Der Grundaufbau des Wurzelballen-Unterschneide- und Aushebegeräts zeichnet sich durch eine klare Struktur und einfachen Aufbau aus, aus der zwei Ausgestaltungen erzeugbar sind.

Eine erste bevorzugte Ausgestaltung weist zwei gegenüberliegende Unterschneidemesser und zwei beabstandete Schwenklageraufnahmen auf. Die erste Schwenklageraufnahme ist an einem freien Ende eines ersten Tragarmes angeordnet und die zweite Schwenklageraufnahme an einem freien Ende eines zweiten Tragarmes. Der erste Tragarm ist wiederum mit einem ersten Querbalken und der zweite Tragarm mit einem zweiten Querbalken verbunden, wobei die Querbalken vorzugsweise durch zwei Linearantriebe bewegbar in und/oder an einer Linearführungseinheit gelagert sind, womit der Abstand der Tragarme und somit die Position der Schwenklageraufnahmen entlang einer Linearachse X, X' veränderbar ist. Die Linearführungseinheit selbst ist an einer Trägerplatte angeordnet.

Bei einer bevorzugten Weiterbildung ist der erste Tragarm an einem ersten Querbalken schwenkbar gelagert und mittels eines ersten Schwenkantriebs um eine Schwenkachse D schwenkbar und/oder der zweite Tragarm an einem zweiten Querbalken schwenkbar gelagert und mittels eines zweiten Schwenkantriebs um eine Schwenkachse D' schwenkbar, wobei die Schwenkachsen D, D' quer zur Achse X, X' verlaufen. Hiermit ist es in einer aufgeschwenkten Stellung auf vorteilhafte Weise möglich, auch Pflanzen mit breiterem Profil anfahren zu können. Weiterhin lassen sich im Falle einer Störung die Tragarme öffnen, um eine mögliche Störungsursache zu beheben.

Bei einer alternativen Weiterbildung sind die Tragarme jeweils um eine gemeinsame vertikale Schwenkachse D gemeinsam mit dem jeweiligen Querbalken und einer zugeordneten Linearführungseinheit in einem Schwenklager an der Trägerplatte gelagert. Als Schwenkantrieb kann ein Hydraulikzylinder in linearer Bauform vorgesehen sein. Bevorzugt kann jedoch auch ein Schwenkzylinder, ein Hydraulikmotor oder ein Elektromotor vorgesehen sein.

Die Tragarme können einen ovalen, kreisförmigen, polygonalen, insbesondere rechteckförmigen Querschnitt, vorzugsweise mit abgerundeten Kanten aufweisen.

Vorteilhafterweise ist der oder jeder Tragarm in der horizontalen Ebene zumindest abschnittsweise derart, insbesondere bogen- oder trapezförmig, ausgebildet, dass der Abstand zur Schwenkachse B, B' im mittleren Abschnitt größer ist als im Bereich der Schwenklageraufnahme. Durch diese vorteilhafte Formgebung ist sichergestellt, dass die Unterschneidemesser in jeder geneigten Position und ein- oder ausgefahrener Stellung in dem gebildeten Freiraum aufnehmbar sind und eine Kollision mit einem Tragarm ausgeschlossen wird.

Eine zweite bevorzugte Ausgestaltung weist lediglich ein Unterschneidemesser auf sowie eine Schwenklageraufnahme, die an einem freien Ende eines Tragarmes angeordnet ist, wobei der Abstand des Tragarmes zu einer dritten Schwenkachse C einer 180°-Schwenkeinrichtung mittels eines Linearantriebs entlang einer Linearachse X, X' veränderbar ist.

In einer bevorzugten Ausbildung umfasst die oder jede Schwenklageraufnahme eine Welle, die mittels eines Antriebs um die erste Schwenkachse A, A' drehbar ist, wobei der Antrieb vorzugsweise als Hydraulikzylinder oder als Hydraulikmotor ausgebildet sein kann. Hierdurch ist eine besonders robuste Ausgestaltung geschaffen. Insbesondere für einen ölfreien Betrieb kann ein Elektromotor vorgesehen werden.

In einer vorteilhaften Weiterbildung weist die wenigstens eine Welle an der dem Antrieb gegenüberliegenden Stirnseite ein Lagerelement, insbesondere ein Gabelelement, ein sogenanntes Anschweißauge oder einen Gelenkkopf zur Aufnahme einer Schwenkwelle oder eines Schwenkzapfens eines um die zweite Schwenkachse B, B' schwenkbaren Schwenkmittels auf.

Um eine sehr kompakte Bauweise herzustellen, umfasst das oder jedes Schwenkmittel ein zugeordnetes Positionierungsmittel und wenigstens eine Führungsplatte für das oder die Unterschneidemesser, wobei die Winkelstellung des oder jedes Schwenkmittels durch das zugeordnete Positionierungsmittel unabhängig von anderen Schwenkmitteln manuell und/oder automatisch einstellbar und/oder arretierbar ist.

In einer bevorzugten Weiterbildung sind zum Führen und Fixieren des oder jedes Unterschneidemessers an der Führungsplatte und/oder an dem Führungselement mindestens zwei Führungsmittel und wenigstens ein Fixierelement entlang einer Führungsbahn Y, Y' angeordnet und/oder beweglich gelagert, wobei die Führungsbahn Y, Y' zumindest abschnittsweise konkav ausgebildet sein kann.

Das Führungselement weist eine Führungsauflage und seitliche Schenkel auf, wobei die Schenkel winkelförmig ausgebildet sind, sodass das Führungselement das Unterschneidemesser umgreift. An dem oder jedem Schenkel ist wenigstens ein Fixierelement in Form eines hydraulisch und/oder mechanisch antreibbaren Bremsklotzes gehaltert. Mit anderen Worten ist das Führungselement nach Art eines Bremssattels ausgeführt, sodass das Unterschneidemesser sicher gehalten werden kann.

Zum Bewegen des oder jedes Unterschneidemessers in Längsrichtung - entlang der Führungsbahn Y, Y' - ist jeweils ein Antrieb vorgesehen, der bevorzugt als Hydraulikzylinder ausgebildet ist, wodurch eine kostengünstige und robuste Bauart sichergestellt ist. In einer alternativen Weiterbildung kann der Antrieb auch motorisch in Kombination mit einem Ritzel-Zahnstangen- oder Kettenantrieb ausgebildet sein, was einen ölfreien Betrieb ermöglicht.

In einer besonders bevorzugten Ausbildung ist das oder jedes Unterschneidemesser zweischneidig ausgebildet, d.h. es hat zwei voneinander wegweisende Schneidkanten und einen flachen symmetrischen, insbesondere sechseckigen oder rhombischen Querschnitt. In einer Abwandlung weisen das oder jedes Unterschneidemesser einen linsenförmigen, insbesondere einen konkav-konvex-linsenförmigen Querschnitt, nach Art einer optischen Sammellinse, auf. Die Unterschneidemesser haben somit zwei Schneidkanten, die parallel verlaufen. Aufgrund dieser vorteilhaften gleichartigen und symmetrischen Ausbildung sind die Unterschneidemesser untereinander tauschbar, was die Nutzungsdauer deutlich erhöht und die Ersatzteilhaltung erheblich vereinfacht. Somit sind die Unterschneidemesser besonders geeignet, einen Wurzelballen sowohl in einer Vorwärtsbewegung als auch in einer Rückwärtsbewegung zu unterschneiden. Die Unterschneidemesser sind in ihrer Längserstreckung konkav ausgebildet, wobei die bogenförmigen Schneidkanten parallel verlaufen. Die Schmalseiten der Unterschneidemesser beschreiben jeweils einen Bogen, insbesondere einen Kreisbogen zwischen 15° und 150°, bevorzugt zwischen 45° und 145°, besonders bevorzugt zwischen 90° und 135°, wobei eine gedachte Achse durch die Kreismittelpunkte der genannten Kreisbögen parallel zu der oder den Schwenkachsen B und B' verläuft. Das oder jedes Unterschneidemesser ist an wenigstens einer konkav ausgebildeten Führungsplatte zwischen Führungsmitteln, insbesondere paarweise angeordneten Führungsrollen oder Gleitführungen, bewegbar gelagert, wobei die Krümmung der konkav ausgebildeten Führungsplatte mit der Krümmung des Unterschneidemessers korrespondiert.

Die Unterschneidemesser sind bevorzugt aus einem speziellen Messerstahl gefertigt, welche die notwendigen Eigenschaften aufweist. In einer vorteilhaften Weiterbildung, insbesondere zur weiteren Standzeiterhöhung der Unterschneidemesser können diese an den Schneidkanten mit Hartmetalleinsätzen und/oder PKD-Einsätzen oder ähnlichen harten und verschleißarmen Schneidwerkmitteln bestückt sein. PKD ist eine übliche Kurzbezeichnung für polykristallinen Diamant.

Die Trägerplatte weist mindestens ein, vorzugsweise drei Koppelelemente auf, nämlich ein erstes Koppelelement für eine sichere form- und kraftschlüssige mechanische Kopplung des Wurzelballen-Unterschneide- und Aushebegeräts mit dem Trägerfahrzeug, bspw. ein Traktor oder Anbaubaggerlader o. ä. Ein weiteres Koppelelement kann für die, insbesondere hydraulischen, Antriebe vorgesehen sein.

Die Aufgabe wird auch gelöst durch ein Verfahren für Baumschulen, im Garten- und Landschaftsbau sowie in der Forstwirtschaft zum Unterschneiden und Ausheben von Pflanzen mit Wurzelballen mit den Schritten,
- Koppeln eines mit zwei Unterschneidemessern ausgerüstetem Wurzelballen-Unterschneide- und Aushebegeräts nach einem der Ansprüche 1 bis 14 mit einem Trägerfahrzeug,
- Einstellen des Abstandes der Unterschneidemesser auf die Breite des auszuhebenden Wurzelballens,
- Einstellen der Neigung der Unterschneidemesser auf die Tiefe des auszuhebenden Wurzelballens,
- Schwenken der Unterschneidemesser in eine etwa horizontale Lage, wobei die Unterschneidemesser ein zur auszuhebenden Pflanze offene U-Form bilden,
- Heranfahren des Unterschneide- und Aushebegeräts an die auszuhebende Pflanze,
- Schwenken der Unterschneidemesser nach unten und nachfolgend unter Beibehaltung der Schwenkbewegung nach oben bis in eine etwa horizontale Lage,
- Zurückschwenken der Unterschneidemesser nach unten unterhalb des Wurzelballens,
- Anheben des Wurzelballen-Unterschneide- und Aushebegeräts mit der Pflanze nebst Wurzelballen und
- Abtransportieren der Pflanze nebst Wurzelballen.

In einer bevorzugten Weiterbildung umfasst das Verfahren die weiteren Schritte:
- Koppeln des Wurzelballen-Unterschneide- und Aushebegeräts mit einer Bedien- und Anzeigeeinheit, welche einen berührungsempfindlichen Bildschirm aufweist,
- Auswählen der Breite und der Tiefe des auszuhebenden Wurzelballens auf dem berührungsempfindlichen Bildschirm und
- Aktivieren der Antriebe zum Einstellen des Abstandes der Tragarme sowie der Winkelstellung der Unterschneidemesser. Hiermit sind u.a. ein hoher Bedienkomfort und insbesondere eine reproduzierbare Ballengröße gegeben.

Zusätzliche Vorteile und vorteilhafte Ausgestaltungen der Erfindung sind der nachfolgenden Beschreibung, den Zeichnungen und/oder den Ansprüchen entnehmbar.

Die Erfindung wird im Folgenden anhand bevorzugter Ausführungsformen unter Bezugnahme auf die beigefügten Figuren erläutert. Dabei zeigt
Fig. 1 eine perspektivische Vorderansicht eines erfindungsgemäßen Wurzelballen-Unterschneide- und Aushebegeräts in einer ersten Ausbildung und ersten Betriebsstellung für eine erste Ballenform,
Fig. 2 eine perspektivische Vorderansicht eines erfindungsgemäßen Wurzelballen-Unterschneide- und Aushebegeräts in einer zweiten Ausbildung und ersten Betriebsstellung für eine erste Ballenform,
Fig. 3 eine perspektivische Draufsicht des Wurzelballen-Unterschneide- und Aushebegeräts gemäß Fig. 1,
Fig. 4 eine perspektivische Draufsicht des Wurzelballen-Unterschneide- und Aushebegeräts gemäß Fig. 2 in einer zweiten Betriebsstellung für eine zweite Ballenform,
Fig. 5 eine perspektivische Seitenansicht des Wurzelballen-Unterschneide- und Aushebegeräts gemäß Fig.1 in einer dritten Betriebsstellung,
Fig. 6 eine perspektivische Vorderansicht des Wurzelballen-Unterschneide- und Aushebegeräts gemäß Fig.1 in einer vierten Betriebsstellung,
Fig. 7 eine perspektivische Seitenansicht eines erfindungsgemäßen Wurzelballen-Unterschneide- und Aushebegeräts in einer dritten Ausbildung,
Fig. 8 eine perspektivische Seitenansicht eines erfindungsgemäßen Wurzelballen-Unterschneide- und Aushebegeräts in einer vierten Ausbildung,
Fig. 9 eine perspektivische Detailansicht aus Fig. 1 schräg von links oben,
Fig. 10 eine perspektivische Detailansicht aus Fig. 1 schräg von rechts oben,
Fig. 11 eine perspektivische Detailansicht aus Fig. 2 schräg von rechts oben,
Fig. 12 eine Detailansicht einer weiteren Rollenführung für ein Unterschneidemesser einer ersten Art,
Fig. 13 eine Detailansicht einer weiteren Rollenführung für ein Unterschneidemesser einer zweiten Art,
Fig. 14 eine Detailansicht einer weiteren Rollenführung für ein Unterschneidemesser einer dritten Art,
Fig. 15 eine perspektivische Draufsicht schräg von oben eines erfindungsgemäßen Wurzelballen-Unterschneide- und Aushebegeräts in einer fünften Ausbildung in einer ersten Betriebsstellung und
Fig. 16 eine perspektivische Draufsicht schräg von oben des Wurzelballen-Unterschneide- und Aushebegeräts gemäß Fig. 15 in einer zweiten Betriebsstellung.

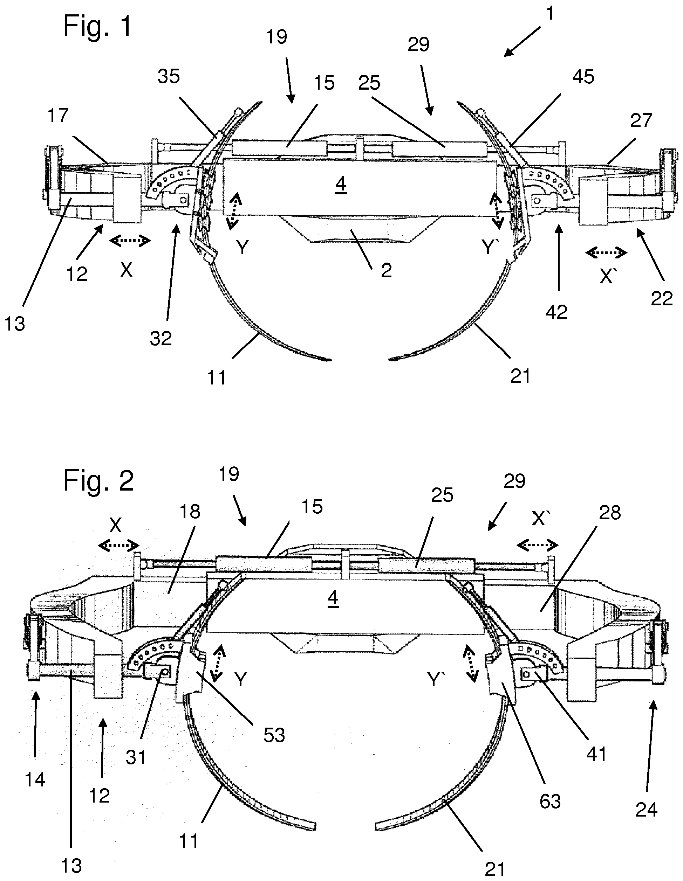

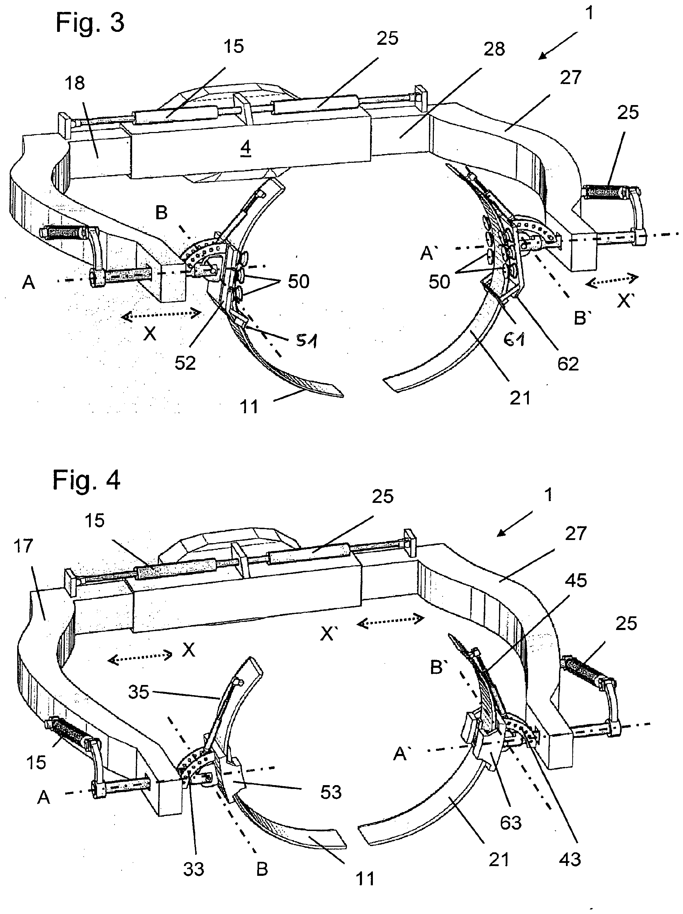

Die Fig. 1 und Fig. 3 zeigen eine perspektivische Vorderansicht bzw. Draufsicht eines erfindungsgemäßen Wurzelballen-Unterschneide- und Aushebegeräts in einer ersten Ausbildung und in einer ersten Betriebsstellung mit einer ersten Einstellung der beiden bogenförmigen Unterschneidemesser 11, 21, die separat schwenkbar um eine gemeinsame Schwenkachse A, A' in einer linken bzw. in einer rechten Schwenklageraufnahme 12, 22 gelagert sind. Die Schwenklageraufnahmen 12, 22 sind jeweils an einem freien Ende eines Tragarmes 17, 27 angeordnet, welche mit jeweils einem linear bewegbaren Querbalken 18, 28 verbunden sind. Wie die Doppelpfeile X, X' erkennen lassen, sind die Querbalken 18, 28 beweglich in einer Linearführungseinheit 4 gelagert. An den Querbalken 18, 28 sind im Ausführungsbeispiel jeweils eine Kolbenstange eines Hydraulikzylinders 15, 25 gehaltert, wobei die Hydraulikzylinder 15, 25 selbst an der gemeinsamen Linearführungseinheit 4 gelagert sind. Anstelle der Hydraulikzylinder 15, 25 sind auch andere Linearantriebe, bspw. Motor-Spindel-Kombinationen, einsetzbar. Im Falle einer Motor-Spindel-Kombination wäre es für eine vor Schmutz und Erdreich geschützte Ausführung vorteilhaft, die Linearantriebe vollständig innerhalb der Querbalken 18, 28 und der Linearführungseinheit 4 anzuordnen. Die Linearantriebe 19, 29 können über eine nicht dargestellte Steuerungseinheit derart angesteuert werden, dass die Tragarme 17, 27 gegenläufig oder gleichläufig verstellt werden können, so dass sowohl verschiedene Abstände als auch ein seitlicher Versatz einstellbar ist.

Die Tragarme 17, 27 haben im Ausführungsbeispiel, wie die verbundenen Querbalken 18, 28, einen rechteckförmigen Querschnitt. Die Tragarme 17, 27 können in einer Abwandlung einen ovalen, kreisförmigen, polygonalen, insbesondere rechteckförmigen Querschnitt, vorzugsweise mit abgerundeten Kanten aufweisen. Der Abstand zwischen den Tragarmen 17, 27 ist in der Mitte größer als an den beiden Enden, wodurch im mittleren Abschnitt ein Freiraum zum Einschwenken der Unterschneidemesser gebildet ist.

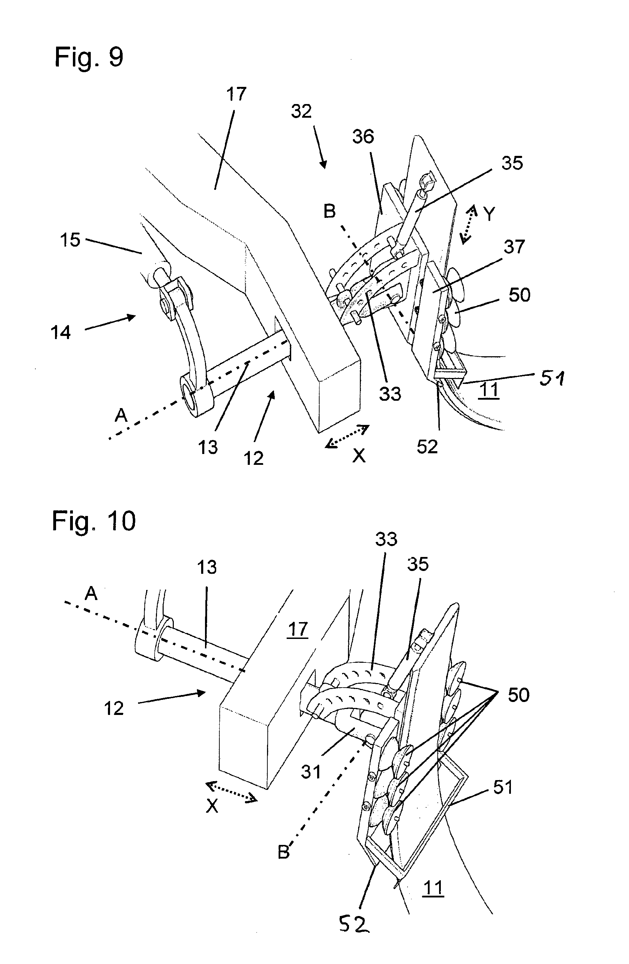

Wie den Fig. 1 und 3 sowie insbesondere den Fig. 9 und 10 zu entnehmen ist, sind zum Schwenken der Unterschneidemesser 11, 21 drehbare Wellen 13, 23 vorgesehen, die durch zugeordnete Antriebe 14, 24 unter einem nicht dargestellten Wurzelballen hindurch geschwenkt werden können. Im Ausführungsbeispiel sind die separat steuerbaren Antriebe 14, 24 als Hydraulikzylinder 15, 25 mit einem verbundenen Schwenkhebel ausgeführt. In den Ausführungsbeispielen gemäß Fig. 1 bis 4 sind die Antriebe 14, 24 derart ausgeführt, dass die Unterschneidemesser 11, 21 beim Ausfahren der Hydraulikzylinder 15, 25 sich in Richtung der Linearführungseinheit 4 bewegen. Durch eine andere Anordnung der Schwenkhebel und/oder der Hydraulikzylinder 15, 25 ist es möglich, dass die Hydraulikzylinder 15, 25 beim Ausfahren die Unterschneidemesser 11, 21 nach vorn, d.h. von der Linearführungseinheit 4 weg bewegt werden.

Um das Wurzelballen-Unterschneide- und Aushebegerät sowohl für tiefere als auch flachere Wurzelballen optimal nutzen zu können, d.h. nur so viel Erdreich wie nötig auszuheben, ist an jedem Tragarm 17, 27 ein zweites Schwenkmittel 32, 42 angeordnet, welches um eine zweite Schwenkachse B, B', die quer zur ersten Schwenkachse A, A' verläuft, schwenkbar ist. Die Wellen 13, 23 weisen hierfür an ihren einander zugewandten Stirnseiten jeweils ein Gabelelement 31, 41 zur Aufnahme einer Schwenkwelle oder eines Schwenkzapfens auf. Anstelle des Gabelelements 31, 41 kann bspw. auch ein sogenanntes Anschweißauge oder ein Gelenkkopf - jeweils mit eingebettetem Schwenk- oder Starrlager - vorgesehen sein.

Weiterhin lassen die Fig. 1 und 3 sowie 9 und 10 erkennen, dass die Schwenkmittel 32, 42 in einer ersten Ausbildung jeweils eine Führungsplatte 36, 46 aufweisen, an der Führungsrollen 50 gelagert und paarweise angeordnet sind. An den Führungsplatten 36, 46 sind zudem Abstreifer 51, 61 und Schaber 52, 62 zum Reinigen der Unterschneidemesser 11, 21 gehaltert. Die Schwenkmittel 32, 42 umfassen neben den Führungsplatten 36, 46 jeweils ein Positionierungsmittel 33, 43, hiermit sind die Winkelstellungen der Schwenkmittel 32, 42 nebst Führungsplatten 36, 46 und damit der Unterschneidemesser 11, 21 einfach und unabhängig voneinander einstellbar und/oder arretierbar.

Die Fig. 2 und Fig. 4 zeigen eine perspektivische Vorderansicht bzw. Draufsicht eines erfindungsgemäßen Wurzelballen-Unterschneide- und Aushebegeräts 1 in einer zweiten Ausbildung in einer ersten Betriebsstellung mit einer ersten Einstellung (Fig. 2) bzw. mit einer zweiten Einstellung (Fig. 4) der bogenförmigen Unterschneidemesser 11, 21. Der Unterschied gegenüber der ersten Ausbildung gemäß den Fig. 1 und 3 besteht in der Ausbildung der Schwenkmittel 32, 42, die dort ein als Umgriffführung ausgebildetes Führungselement 53, 63 aufweisen. Die Fig. 4 lässt zudem erkennen, dass die Hydraulikzylinder 35, 45 weiter ausgefahren sind als bei der in Fig. 2 gezeigten Einstellung und dass die Positionierungsmittel 33, 43 eine abweichende Winkelstellung haben, sodass die die Unterschneidemesser 11, 21 auf einen flacheren Wurzelballen eingestellt sind.

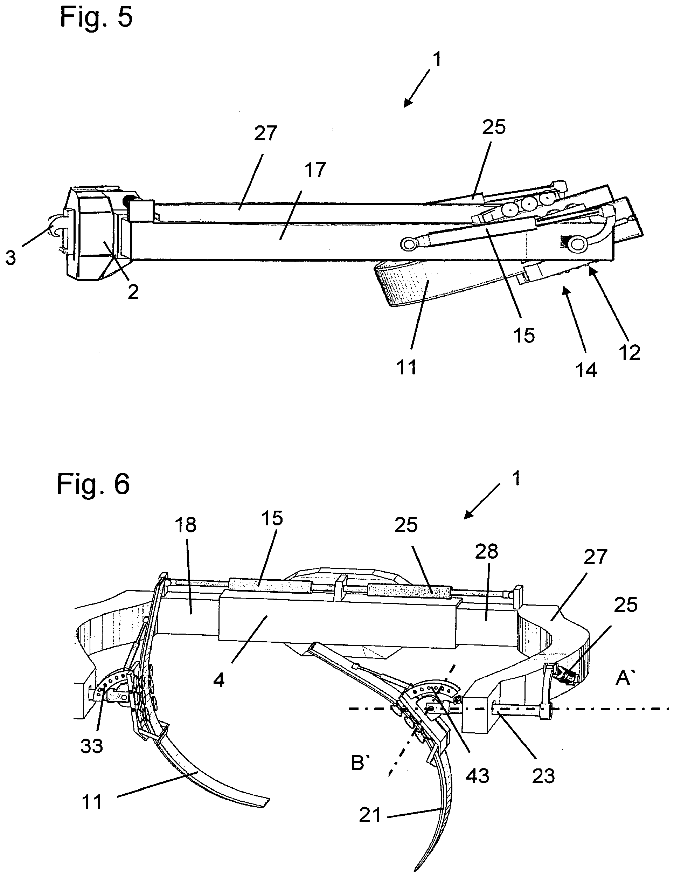

Fig. 5 zeigt eine perspektivische Seitenansicht des erfindungsgemäßen Wurzelballen-Unterschneide- und Aushebegeräts 1 gemäß Fig. 1 in einer Betriebsstellung bei der die Unterschneidemesser 11, 21 in eine fast horizontale Stellung geschwenkt worden sind, sodass die offene, im Bild rechte Seite zu einer - nicht dargestellten - auszuhebenden Pflanze weist. Wie die Fig. 5 weiter erkennen lässt, ist an einer Trägerplatte 2 ein hakenförmiges Koppelelement 3 gehaltert, welches zur kraft- und/oder formschlüssigen mechanischen Kopplung des Wurzelballen-Unterschneide- und Aushebegeräts 1 mit einem - nicht dargestellten - Trägerfahrzeug ausgebildet ist. Der besseren Übersicht halber sind hydraulische und elektrische Koppelemente des Wurzelballen-Unterschneide- und Aushebegeräts 1 nicht dargestellt.

Die Fig. 6 zeigt eine perspektivische Draufsicht des erfindungsgemäßen Wurzelballen-Unterschneide- und Aushebegeräts gemäß Fig. 1 in einer weiteren Betriebsstellung, wobei dort eines der bogenförmigen Unterschneidemesser 11, 21 bspw. auf1grund einer Überlast ausgeklinkt ist oder zu Reinigungs- und/oder Wartungszwecken ausgeklinkt wurde. Wie die Fig. 6 weiter erkennen lässt, ist das Positionierungsmittel 43 von der Welle 23 einseitig gelöst.

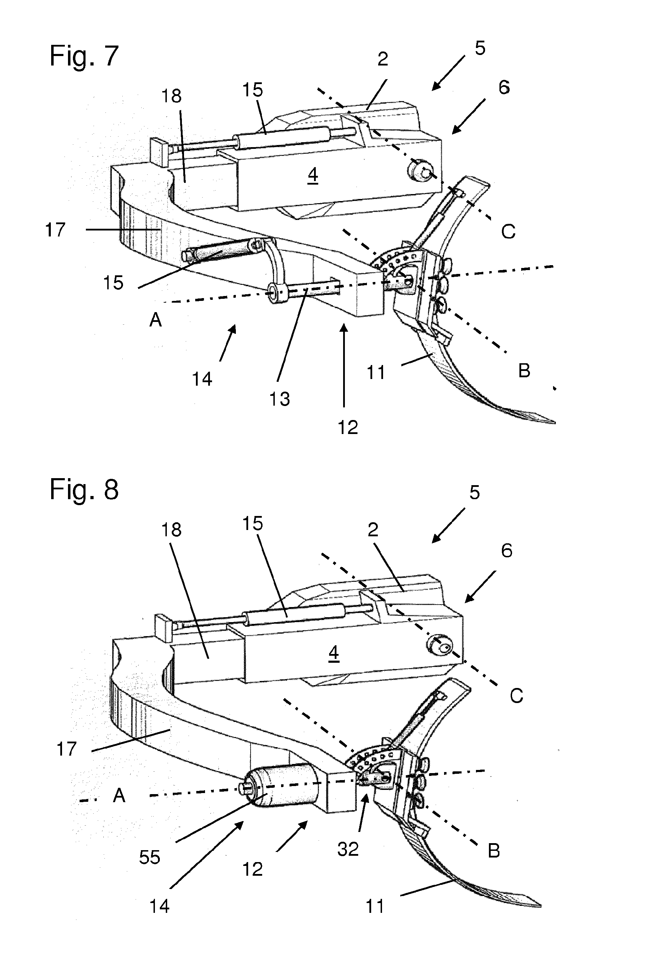

Die Fig. 7 zeigt eine perspektivische Ansicht eines erfindungsgemäßen Wurzelballen-Unterschneide- und Aushebegeräts 5 in einer dritten Ausbildung in einer ersten Betriebsstellung mit einer ersten Einstellung eines einzigen bogenförmigen Unterschneidemessers 11. Das Wurzelballen-Unterschneide- und Aushebegerät 5 in der dritten Ausbildung besteht gewissermaßen aus einem halben Wurzelballen-Unterschneide- und Aushebegerät 1 in der ersten Ausbildung gemäß Fig. 1. Hierdurch ist das Wurzelballen-Unterschneide- und Aushebegerät 5 wesentlich leichter und kostengünstiger ausgeführt. Nachteilig ist jedoch, dass ein Wurzelballen in einem Arbeitsgang nur etwa hälftig unterschnitten werden kann, sodass ein zusätzlicher Arbeitsgang erforderlich ist, um einen Wurzelballen vollständig zu unterschneiden. Um die zweite Wurzelballenhälfte unterschneiden zu können, ist dort eine 180°-Schwenkeinrichtung 6 vorgesehen, um den Tragarm 17 auf die gegenüberliegende Seite zu verbringen. Die Schwenkeinrichtung 6 weist einen nicht dargestellten Antrieb auf, welcher als Hydraulikzylinder, Hydraulikmotor oder Elektromotor, ggf. jeweils mit einer Zahnstangen-Ritzel-Kombination ausgeführt sein kann.

Die Fig. 8 zeigt eine perspektivische Ansicht eines erfindungsgemäßen Wurzelballen-Unterschneide- und Aushebegeräts 5 in einer vierten Ausbildung in einer ersten Betriebsstellung mit einer ersten Einstellung eines einzigen bogenförmigen Unterschneidemessers. Der Unterschied gegenüber der dritten Ausbildung gemäß Fig. 7 ist durch die Art des Antriebs 14 zum Schwenken um die Schwenkachse A gekennzeichnet. Dort ist anstelle des Hydraulikzylinders 15 ein Motor 55, insbesondere ein Hydraulik- oder Elektromotor vorgesehen, welcher ein Schwenken des Unterschneidemessers 11 um 180° oder mehr erlaubt.

Die Fig. 9 und Fig. 10 zeigen in vergrößerter Darstellung eine perspektivische Detailansicht des freien Endes eines Tragarmes 17 aus Fig. 1 bzw. Fig. 3. Am freien Ende - des in Fahrtrichtung und/oder Arbeitsrichtung - rechten Tragarmes 17 ist benachbart zur Schwenklageraufnahme 12, das Schwenkmittel 32 um die zweite Schwenkachse B schwenkbar gelagert. Die Schwenklageraufnahme 12 weist eine Welle 13 auf, die mittels eines Hydraulikzylinders 15 und eines Schwenkhebels um die erste Schwenkachse A drehbar gelagert ist, wobei die Schwenkachse A mit der Mittelachse der Welle 13 zusammenfällt. Im Ausführungsbeispiel ist das Positionierungsmittel 33 für eine manuelle Verstellung als bogenförmiges Blech mit einer Mehrzahl von Bohrungen und einem Verriegelungsbolzen ausgeführt. In einem nicht dargestellten Ausführungsbeispiel kann für einen höheren Automatisierungsgrad auch ein Hydraulikzylinder, Hydraulikmotor oder Elektromotor in Verbindung mit einem Fixierelement, bspw. einem Bremsschuh, in geeigneter Bauart als Antriebskombination vorgesehen sein. Zum Längspositionieren des Unterschneidemessers 11 entsprechend des Doppelpfeils Y ist dieses zwischen paarweise angeordneten Führungsrollen 50 an der Führungsplatten 36 beweglich geführt und gelagert, sowie durch einen Hydraulikzylinder 35 beweg- und positionierbar. Wie die Fig. 9 und Fig. 10 weiter erkennen lassen, ist das Unterschneidemesser 11 zweischneidig ausgebildet und weist einen flachen symmetrischen sechseckigen Querschnitt auf. Insbesondere ist das Unterschneidemesser 11 über die flache Seite bogenförmig konkav ausgebildet. Zum Einstellen der Rollen 50 auf ein Unterschneidemesser 11, 21 mit einer andere Breite oder zum Austauschen desselben und insbesondere zum seitlichen Fixieren oder Festsetzen des Unterschneidemessers 11 sind die vorderen Rollen 50 auf einer einstellbaren Rollenplatte 37, 47 gelagert.

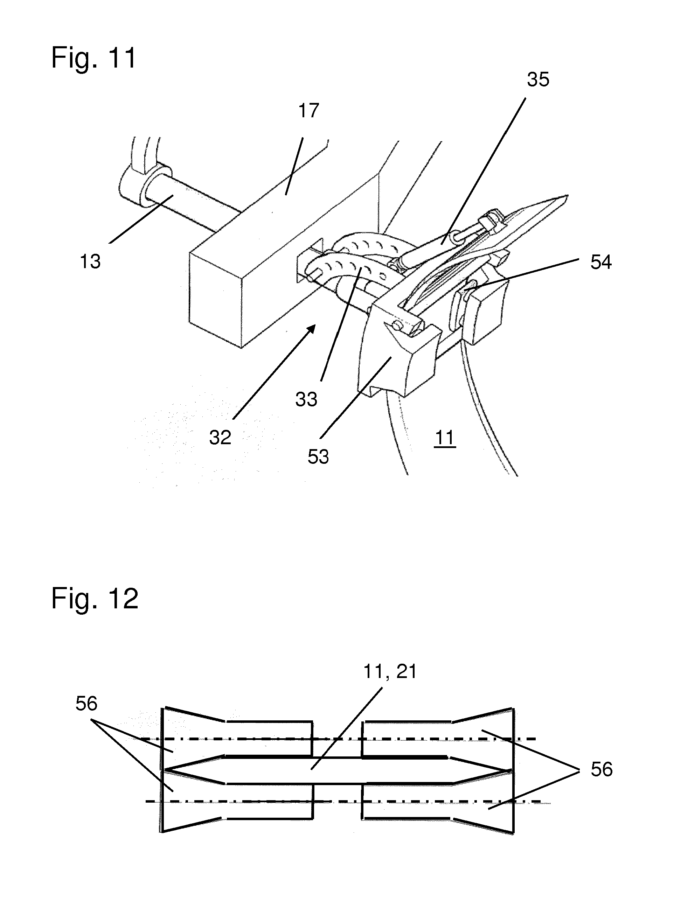

Die Fig. 11 zeigt in vergrößerter Darstellung eine perspektivische Detailansicht des freien Endes eines Tragarmes 17 aus Fig. 2 bzw. Fig. 4 eines Wurzelballen-Unterschneide- und Aushebegeräts 1, 5. Der Unterschied gegenüber der ersten Ausbildung gemäß den Fig. 9, 10 besteht lediglich in der Ausbildung des Schwenkmittels 32, welches dort ein als Umgriffführung ausgebildetes Führungselement 53 nach Art eines Bremssattels aufweist. Wie die Fig. 11 weiter erkennen lässt, sind dort zum Festklemmen des Unterschneidemessers 11 Fixierelemente 54 vorgesehen, die bevorzugt als hydraulisch betätigte Bremsklötze ausgebildet sind. Nicht dargestellt sind integrierte Gleitführungen, welche jedoch bevorzugt vorgesehen sind.

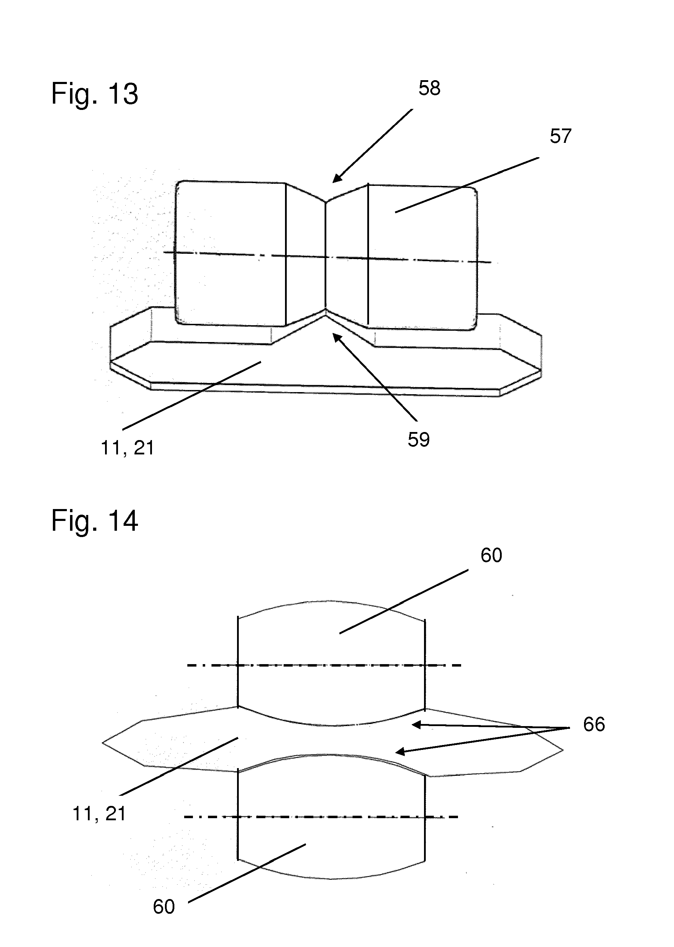

In den Fig. 12, 13 und 14 sind verschiedene weitere Ausbildungen von Rollen 56, 57, 60 zum Führen und Fixieren verschiedener Unterschneidemesser 11, 21 gezeigt. Abweichend zu den Ausführungsbeispielen in den Fig. 1, 3, 5, 6, 7, 8 wirken die Rollen 56, 57, 60 hier auf die flachen Seiten der Unterschneidemesser 11, 21. Die Rollen 56, 57, 60 können in der Lagerung durch mechanische Federn, eine geeignete Hebelmechanik oder hydraulische Zylinder vorgespannt sein, wodurch ein größerer Anpressdruck aufbringbar ist. Die Fig. 12 zeigt bspw. paarweise angeordnete Führungsrollen 56 ober- und unterhalb eines Unterschneidemessers 11, 21 mit sechseckigem Querschnitt. Die Fig. 13 zeigt eine Führungsrolle 57 mit einer umlaufenden Ringnut 58, wodurch ein spezielles Unterschneidemesser 11, 21 mit einer mittigen Erhebung 59 zentriert geführt werden kann und fixierbar ist. Die Fig. 14 zeigt zwei ballige Führungsrollen 57, wodurch ein weiteres speziell geformtes Unterschneidemesser 11, 21 mit einer konkaven Vertiefung 66 mittig geführt und festgesetzt werden kann.

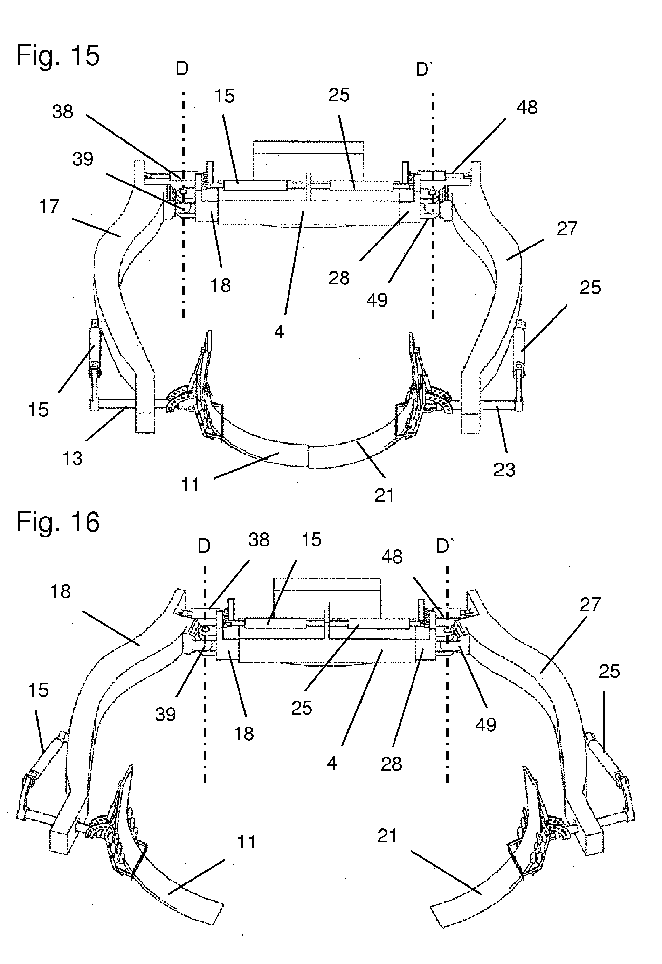

Die Fig. 15 zeigt eine perspektivische Draufsicht schräg von oben eines erfindungsgemäßen Wurzelballen-Unterschneide- und Aushebegeräts in einer fünften Ausbildung in einer ersten Betriebsstellung. Die Fig. 16 zeigt eine perspektivische Draufsicht schräg von oben eines erfindungsgemäßen Wurzelballen-Unterschneide- und Aushebegeräts in einer fünften Ausbildung in einer zweiten Betriebsstellung. Der Unterschied zu der ersten Ausbildung gemäß Fig. 1 und Fig. 3 besteht darin, dass die Tragarme 17, 27 zusätzlich jeweils um eine vertikale Schwenkachse D, D' schwenkbar an den Querbalken 18 bzw. 28 in einem Schwenklager 39, 49 gelagert sind. Als Schwenkantriebe sind im Ausführungsbeispiel Hydraulikzylinder 38, 48 in linearer Bauform vorgesehen. Alternativ können jedoch auch Schwenkzylinder, Hydraulikmotoren oder Elektromotoren vorgesehen sein.

In einer nicht gezeigten Abwandlung des Ausführungsbeispiels gemäß Fig. 15 und Fig. 16 sind die Tragarme 17, 27 zusätzlich jeweils um eine gemeinsame vertikale Schwenkachse D gemeinsam mit dem jeweiligen Querbalken 18 bzw. 28 und einer zugeordneten Linearführungseinheit in einem Schwenklager an der Trägerplatte 2 gelagert. Als Schwenkantrieb kann ein Hydraulikzylinder in linearer Bauform vorgesehen sein. Alternativ kann jedoch auch ein Schwenkzylinder, ein Hydraulikmotor oder ein Elektromotor vorgesehen sein.

### Bezugsziffernliste:

- 1: Wurzelballen-Unterschneide- und Aushebegerät
- 2: Trägerplatte
- 3: Koppelelement
- 4: Linearführungseinheit
- 5: Wurzelballen-Unterschneide- und Aushebegerät
- 6: 180°-Schwenkeinrichtung
- 11, 21: Unterschneidemesser
- 12, 22: Schwenklageraufnahme
- 13, 23: Welle
- 14, 24: Antrieb
- 15, 25: Hydraulikzylinder
- 16, 26: Hebel
- 17, 27: Tragarm
- 18, 28: Querbalken
- 19, 29: Linearantrieb
- 31, 41: Gabelelement
- 32, 42: Schwenkmittel
- 33, 43: Positionierungsmittel
- 35, 45: Hydraulikzylinder
- 36, 46: Führungsplatte
- 37, 47: Rollenplatte
- 38, 48: Hydraulikzylinder
- 39, 49: Schwenklager
- 50: Führungsrolle
- 51, 61: Schaber
- 52, 62: Abstreifer
- 53, 63: Führungselement
- 54, 64: Fixierelement
- 55: Motor
- 56, 57: Führungsrolle
- 60: Führungsrolle
- 66: Vertiefung
- A, A': Schwenkachse
- B, B': Schwenkachse
- C: Schwenkachse
- D, D': Schwenkachse
- X, X': Linearachse
- Y, Y': Führungsbahn

## Patentansprüche

1. Wurzelballen-Unterschneide- und Aushebegerät (1, 5) mit wenigstens einem Unterschneidemesser (11, 21), das schwenkbar um eine erste Schwenkachse A, A' in einer Schwenklageraufnahme (12, 22) gelagert ist, wobei die Position der Schwenklageraufnahme (12, 22) um eine erste Achse X, X' verschiebbar ist, **dadurch gekennzeichnet, dass** das Unterschneidemesser (11, 21) benachbart zu der Schwenklageraufnahme (12, 22) auf einer Führungsbahn Y, Y' um eine zweite Schwenkachse B, B' schwenkbar gelagert ist, wobei die zweite Schwenkachse B, B' quer zur ersten Schwenkachse A, A' verläuft.

2. Wurzelballen-Unterschneide- und Aushebegerät nach Anspruch 1, **dadurch gekennzeichnet, dass** die Schwenklageraufnahme (12, 22) an einem freien Ende eines Tragarmes (17, 27) angeordnet und der Tragarm (17, 27) um eine dritte Schwenkachse C einer Schwenkeinrichtung (5) schwenkbar ist.

3. Wurzelballen-Unterschneide- und Aushebegerät nach Anspruch 1, **dadurch gekennzeichnet, dass** das Wurzelballen-Unterschneide- und Aushebegerät (1) ein erstes Unterschneidemesser (11, 21) und ein zweites Unterschneidemesser (11, 21) aufweist, welche in zugeordneten separaten Schwenklageraufnahmen (12, 22) gelagert sind, wobei die erste Schwenklageraufnahme (12) an einem freien Ende eines ersten Tragarmes (17) angeordnet ist und die zweite Schwenklageraufnahme (22) an einem freien Ende eines zweiten Tragarmes (27) angeordnet ist und wobei der Abstand der Tragarme (17, 27) mittels wenigstens eines Linearantriebs (10, 29) entlang der Achse X, X' verschiebbar ist.

4. Wurzelballen-Unterschneide- und Aushebegerät nach Anspruch 3, **dadurch gekennzeichnet, dass** der erste Tragarm (17) an einem ersten Querbalken (18) schwenkbar gelagert und mittels eines Schwenkantriebs um eine Schwenkachse D schwenkbar ist und der zweite Tragarm (27) an einem zweiten Querbalken (28) schwenkbar gelagert und mittels eines Schwenkantriebs um eine Schwenkachse D' schwenkbar ist, wobei die Schwenkachsen D, D' quer zur Achse X, X' verlaufen.

5. Wurzelballen-Unterschneide- und Aushebegerät nach Anspruch 3, **dadurch gekennzeichnet, dass** der erste Tragarm (17) an einem ersten Querbalken (18) in oder an einer ersten Linearführungseinheit linear bewegbar gelagert ist und mit dieser gemeinsam an einer Trägerplatte (2) schwenkbar gelagert ist und der zweite Tragarm (27) an einem zweiten Querbalken (28) in oder an einer zweiten Linearführungseinheit linear bewegbar gelagert ist und mit dieser gemeinsam an der Trägerplatte (2) schwenkbar gelagert ist.

6. Wurzelballen-Unterschneide- und Aushebegerät nach einem der Ansprüche 1 bis 5, **dadurch gekennzeichnet, dass** die oder jede Schwenklageraufnahme (12, 22) eine Welle (3, 13) umfasst, die mittels eines Antriebs (14, 24) um die erste Schwenkachse A, A' drehbar ist.

7. Wurzelballen-Unterschneide- und Aushebegerät nach Anspruch 6, **dadurch gekennzeichnet, dass** die oder jede Welle (13, 23) an der dem Antrieb (14, 24) gegenüberliegenden Stirnseite ein Lagerelement zur Aufnahme einer Schwenkwelle oder eines Schwenkzapfens eines um die zweite Schwenkachse B, B' schwenkbaren Schwenkmittels (32, 42) aufweist.

8. Wurzelballen-Unterschneide- und Aushebegerät nach Anspruch 7, **dadurch gekennzeichnet, dass** das oder jedes Schwenkmittel (32, 42) ein Positionierungsmittel (33, 43) und ein Führungselement (36, 46) und/oder ein Führungselement (53) umfasst, wobei die Winkelstellung des oder jedes Schwenkmittels (32, 42) durch das Positionierungsmittel (33, 43) manuell und/oder automatisch einstellbar und/oder arretierbar ist.

9. Wurzelballen-Unterschneide- und Aushebegerät nach Anspruch 8, **dadurch gekennzeichnet, dass** zum Führen und Fixieren des oder jedes Unterschneidemessers (11, 21) an dem Führungselement (36, 46) und/oder dem Führungselement (53) mindestens zwei Führungsmittel und wenigstens ein Fixierelement (54, 64) entlang einer Führungsbahn Y, Y' angeordnet und/oder beweglich gelagert sind.

10. Wurzelballen-Unterschneide- und Aushebegerät nach Anspruch 8 oder 9, **dadurch gekennzeichnet, dass** das oder jedes Unterschneidemesser (11, 21) zwei gegenüberliegende parallele Schneidkanten aufweist und einen flachen symmetrischen Querschnitt hat und mittels eines Antriebs (35, 45) zwischen Führungsmitteln (54, 64) bewegbar gelagert ist und wobei die Führungsmittel als Führungselemente (53) und/oder Führungsrollen (50, 56, 57, 60) ausgebildet sind.

11. Wurzelballen-Unterschneide- und Aushebegerät nach einem der vorangehenden Ansprüche, **dadurch gekennzeichnet, dass** das wenigstens eine Unterschneidemesser (11, 21) entlang einer Führungsbahn Y, Y' relativ zu der Schwenklageraufnahme (12, 22) verschiebbar ist.

12. Wurzelballen-Unterschneide- und Aushebegerät nach einem der Ansprüche 2 bis 11, **dadurch gekennzeichnet, dass** der oder jeder Tragarm (17, 27) mit einem zugeordneten Querbalken (18, 28) verbunden ist, wobei der Querbalken (18, 28) mittels wenigstens eines Linearantriebs (19, 29) bewegbar in und/oder an wenigstens einer Linearführungseinheit (4) gelagert ist.

13. Wurzelballen-Unterschneide- und Aushebegerät nach Anspruch 12, **dadurch gekennzeichnet, dass** der oder jeder Tragarm (17, 27) in der horizontalen Ebene zumindest abschnittsweise derart ausgebildet ist, dass der Abstand zur Schwenkachse B, B' im mittleren Abschnitt größer ist, als im Bereich der Schwenklageraufnahme (12, 22).

14. Wurzelballen-Unterschneide- und Aushebegerät nach Anspruch 13, **dadurch gekennzeichnet, dass** die Linearführungseinheit (4) an einem Trägerelement (2) angeordnet ist, welche wenigstens ein Koppelelement (3) aufweist, das zur mechanischen, hydraulischen und/oder elektrischen Kopplung des Wurzelballen-Unterschneide- und Aushebegeräts (1) mit einem Trägerfahrzeug ausgebildet ist.

15. Verfahren für Baumschulen, im Garten- und Landschaftsbau sowie in der Forstwirtschaft zum Unterschneiden und Ausheben von Pflanzen mit Wurzelballen mit den Schritten,
- Koppeln eines mit zwei Unterschneidemessern (11, 21) ausgerüstetem Wurzelballen-Unterschneide- und Aushebegeräts (1, 5) nach einem der vorangehenden Ansprüche mit einem Trägerfahrzeug,
- Einstellen der Neigung der Unterschneidemesser (11, 21) auf die Tiefe des auszuhebenden Wurzelballens,
- Einstellen des Abstandes der Unterschneidemesser (11, 21) auf die Breite des auszuhebenden Wurzelballens,
- Schwenken der Unterschneidemesser (11, 21) in eine etwa horizontale Lage, wobei die Unterschneidemesser (11, 21) eine zur auszuhebenden Pflanze offene U-Form bilden,
- Heranfahren des Unterschneide- und Aushebegeräts (1,5) an die auszuhebenden Pflanze,
- Schwenken der Unterschneidemesser (11, 21) nach unten und nachfolgend unter Beibehaltung der Schwenkbewegung nach oben in etwa eine horizontale Lage,
- Zurückschwenken der Unterschneidemesser (11, 21) nach unten in eine senkrechte Lage,
- Anheben des Wurzelballen-Unterschneide- und Aushebegeräts (1, 5) mit der Pflanze nebst Wurzelballen und
- Abtransportieren der Pflanze nebst Wurzelballen.

## Claims

1. Root ball undercutting and excavation device (1, 5), comprising at least one undercutting blade (11, 21) which is mounted in a pivot bearing receptacle (12, 22) so as to be pivotable about a first pivot axis A, A', wherein the position of the pivot bearing receptacle (12, 22) is displaceable about a first axis X, X', **characterised in that** the undercutting blade (11, 21) is mounted adjacent to the pivot bearing receptacle (12, 22) on a guide track Y, Y' so as to be pivotable about a second pivot axis B, B', the second pivot axis B, B' extending transversely to the first pivot axis A, A'.

2. Root ball undercutting and excavation device according to claim 1, **characterised in that** the pivot bearing receptacle (12, 22) is arranged on a free end of a support arm (17, 27) and the support arm (17, 27) is pivotable about a third pivot axis C of a pivot device (5).

3. Root ball undercutting and excavation device according to claim 1, **characterised in that** the root ball undercutting and excavation device (1) has a first undercutting blade (11, 21) and a second undercutting blade (11, 21) which are mounted in associated separate pivot bearing receptacles (12, 22), wherein the first pivot bearing receptacle (12) is arranged on a free end of a first support arm (17) and the second pivot bearing receptacle (22) being arranged on a free end of a second support arm (27) and wherein the distance of the support arms (17, 27) is displaceable along the axis X, X' by means of at least one linear drive (10, 29).

4. Root ball undercutting and excavation device according to claim 3, **characterised in that** the first support arm (17) is pivotably mounted on a first cross-beam (18) and is pivotable about a pivot axis D by means of a pivot drive and the second support arm (27) is pivotably mounted on a second cross-beam (28) and is pivotable about a pivot axis D' by means of a pivot drive, the pivot axes D, D' extending transversely to the axis X, X'.

5. Root ball undercutting and excavation device according to claim 3, **characterised in that** the first support arm (17) on a first cross-beam (18) is linearly movably mounted in or on a first linear guide unit and is pivotably mounted together with said guide unit on a support plate (2) and the second support arm (27) on a second cross-beam (28) is linearly movably mounted in or on a second linear guide unit and is pivotably mounted together with said guide unit on the support plate (2).

6. Root ball undercutting and excavation device according to any of claims 1 to 5, **characterised in that** the or each pivot bearing receptacle (12, 22) comprises a shaft (3, 13) which is rotatable about the first pivot axis A, A' by means of a drive (14, 24).

7. Root ball undercutting and excavation device according to claim 6, **characterised in that** the or each shaft (13, 23) has, on the end face opposite the drive (14, 24), a bearing element for receiving a pivot shaft or a pivot pin of a pivot means (32, 42) that is pivotable about the second pivot axis B, B'.

8. Root ball undercutting and excavation device according to claim 7, **characterised in that** the or each pivot means (32, 42) comprises a positioning means (33, 43) and a guide element (36, 46) and/or a guide element (53), it being possible for the angular position of the or each pivot means (32, 42) to be adjusted and/or locked manually and/or automatically by the positioning means (33, 43).

9. Root ball undercutting and excavation device according to claim 8, **characterised in that** in order to guide and fix the or each undercutting blade (11, 21) on the guide element (36, 46) and/or the guide element (53), at least two guide means and at least one fixing element (54, 64) are arranged and/or movably mounted along a guide track Y, Y'.

10. Root ball undercutting and excavation device according to either claim 8 or claim 9, **characterised in that** the or each undercutting blade (11, 21) has two opposite parallel cutting edges and has a flat, symmetrical cross-section and is movably mounted between guide means (54, 64) by means of a drive (35, 45), wherein the guide means is designed as guide elements (53) and/or guide rollers (50, 56, 57, 60).

11. Root ball undercutting and excavation device according to any of the preceding claims, **characterised in that** the at least one undercutting blade (11, 21) is displaceable along a guide track Y, Y' relative to the pivot bearing receptacle (12, 22).

12. Root ball undercutting and excavation device according to any of claims 2 to 11, **characterised in that** the or each support arm (17, 27) is connected to an associated cross-beam (18, 28), wherein the cross-beam (18, 28) is mounted by means of at least one linear drive (19, 29) so as to be movable in and/or on at least one linear guide unit (4).

13. Root ball undercutting and excavation device according to claim 12, **characterised in that** the or each support arm (17, 27) is designed, at least in portions, in the horizontal plane in such a way that the distance to the pivot axis B, B' is greater in the central portion than in the region of the pivot bearing receptacle (12, 22).

14. Root ball undercutting and excavation device according to claim 13, **characterised in that** the linear guide unit (4) is arranged on a support element (2) which has at least one coupling element (3) designed for mechanical, hydraulic and/or electrical coupling of the root ball undercutting and excavation device (1) to a carrier vehicle.

15. Method for undercutting and excavating plants having root balls, for tree nurseries, horticulture and landscaping as well as forestry, the method comprising the steps of
- coupling a root ball undercutting and excavation device (1, 5) according to any of the preceding claims, equipped with two undercutting blades (11, 21), to a carrier vehicle,
- adjusting the inclination of the undercutting blades (11, 21) to the depth of the root ball to be excavated,
- adjusting the distance between the undercutting blades (11, 21) to the width of the root ball to be excavated,
- pivoting the undercutting blades (11, 21) into an approximately horizontal position, wherein the undercutting blades (11, 21) form a U-shape open towards the plant to be excavated,
- bringing the undercutting and excavation device (1, 5) to the plant to be excavated,
- pivoting the undercutting blades (11, 21) downwards and then, maintaining the pivoting movement, upwards into an approximately horizontal position,
- pivoting the undercutting blades (11, 21) back down into a vertical position,
- lifting the root ball undercutting and excavation device (1, 5) together with the plant and the root ball and
- removing the plant and the root ball.

## Revendications

1. Appareil de coupe sous-jacente et d'arrachage de mottes racinaires (1, 5) avec au moins une lame de coupe sous-jacente (11, 21) qui est montée de manière pivotante autour d'un premier axe de pivotement A, A' dans un logement de palier de pivotement (12, 22), la position du logement de palier de pivotement (12, 22) pouvant être déplacée autour d'un premier axe X, X', **caractérisé en ce que** la lame de coupe sous-jacente (11, 21) est montée au voisinage du logement de palier de pivotement (12, 22) sur une trajectoire de guidage Y, Y' de manière pivotante autour d'un deuxième axe de pivotement B, B', le deuxième axe de pivotement B, B' s'étendant transversalement au premier axe de pivotement A, A'.

2. Appareil de coupe sous-jacente et d'arrachage de mottes racinaires selon la revendication 1, **caractérisé en ce que** le logement de palier de pivotement (12, 22) est disposé à une extrémité libre d'un bras de support (17, 27) et le bras de support (17, 27) peut pivoter autour d'un troisième axe de pivotement C d'un dispositif de pivotement (5).

3. Appareil de coupe sous-jacente et d'arrachage de mottes racinaires selon la revendication 1, **caractérisé en ce que** l'appareil de coupe sous-jacente et d'arrachage de mottes racinaires (1) présente une première lame de coupe sous-jacente (11, 21) et une deuxième lame de coupe sous-jacente (11, 21) qui sont montées dans des logements de palier de pivotement (12, 22) séparés associés, le premier logement de palier de pivotement (12) étant disposé à une extrémité libre d'un premier bras de support (17), le deuxième logement de palier de pivotement (22) étant disposé à une extrémité libre d'un deuxième bras de support (27) et l'espacement des bras de support (17, 27) étant déplaçable le long de l'axe X, X' au moyen d'au moins un entraînement linéaire (10, 29).

4. Appareil de coupe sous-jacente et d'arrachage de mottes racinaires selon la revendication 3, **caractérisé en ce que** le premier bras de support (17) est monté pivotant sur une première traverse (18) et peut pivoter autour d'un axe de pivotement D au moyen d'un entraînement de pivotement et le deuxième bras de support (27) est monté pivotant sur une deuxième traverse (28) et peut pivoter autour d'un axe de pivotement D' au moyen d'un entraînement de pivotement, les axes de pivotement D, D' s'étendant transversalement aux axes X, X'.

5. Appareil de coupe sous-jacente et d'arrachage de mottes racinaires selon la revendication 3, **caractérisé en ce que** le premier bras de support (17) est monté mobile linéairement sur une première traverse (18) dans ou sur une première unité de guidage linéaire et monté pivotant conjointement avec celle-ci sur une plaque de support (2) et le deuxième bras de support (27) est monté mobile linéairement sur une deuxième traverse (28) dans ou sur une deuxième unité de guidage linéaire et monté pivotant conjointement avec celle-ci sur la plaque de support (2).

6. Appareil de coupe sous-jacente et d'arrachage de mottes racinaires selon l'une des revendications 1 à 5, **caractérisé en ce que** le ou chaque logement de palier de pivotement (12, 22) comprend un arbre (3, 13) qui peut tourner autour du premier axe de pivotement A, A' au moyen d'un entraînement (14, 24).

7. Appareil de coupe sous-jacente et d'arrachage de mottes racinaires selon la revendication 6, **caractérisé en ce que** le ou chaque arbre (13, 23) présente, à la face frontale opposée à l'entraînement (14, 24), un élément de palier pour recevoir un arbre de pivotement ou un tourillon de pivotement d'un moyen de pivotement (32, 42) pouvant pivoter autour du deuxième axe de pivotement B, B'.

8. Appareil de coupe sous-jacente et d'arrachage de mottes racinaires selon la revendication 7, **caractérisé en ce que** le ou chaque moyen de pivotement (32, 42) comprend un moyen de positionnement (33, 43) et un élément de guidage (36, 46) et/ou un élément de guidage (53), la position angulaire du ou de chaque moyen de pivotement (32, 42) étant réglable et/ou verrouillable manuellement et/ou automatiquement par le moyen de positionnement (33, 43).

9. Appareil de coupe sous-jacente et d'arrachage de mottes racinaires selon la revendication 8, **caractérisé en ce que**, pour le guidage et la fixation de la ou de chaque lame de coupe sous-jacente (11, 21) sur l'élément de guidage (36, 46) et/ou l'élément de guidage (53), au moins deux moyens de guidage et au moins un élément de fixation (54, 64) sont disposés et/ou montés mobiles le long d'une trajectoire de guidage Y, Y'.

10. Appareil de coupe sous-jacente et d'arrachage de mottes racinaires selon la revendication 8 ou 9, **caractérisé en ce que** la ou chaque lame de coupe sous-jacente (11, 21) présente deux arêtes de coupe parallèles opposées et une section transversale symétrique plate et est montée mobile entre des moyens de guidage (54, 64) au moyen d'un entraînement (35, 45) et les moyens de guidage étant réalisés sous la forme d'éléments de guidage (53) et/ou de rouleaux de guidage (50, 56, 57, 60).

11. Appareil de coupe sous-jacente et d'arrachage de mottes racinaires selon l'une des revendications précédentes, **caractérisé en ce que** ladite au moins une lame de coupe sous-jacente (11, 21) est déplaçable le long d'une trajectoire de guidage Y, Y' par rapport au logement de palier de pivotement (12, 22).

12. Appareil de coupe sous-jacente et d'arrachage de mottes racinaires selon l'une des revendications 2 à 11, **caractérisé en ce que** le ou chaque bras de support (17, 27) est relié à une traverse (18, 28) associée, la traverse (18, 28) étant montée mobile dans et/ou sur au moins une unité de guidage linéaire (4) au moyen d'au moins un entraînement linéaire (19, 29).

13. Appareil de coupe sous-jacente et d'arrachage de mottes racinaires selon la revendication 12, **caractérisé en ce que** le ou chaque bras de support (17, 27) est conçu dans le plan horizontal, au moins sur certaines parties, de telle sorte que la distance à l'axe de pivotement B, B' soit plus grande dans la partie centrale que dans la zone du logement de palier de pivotement (12, 22).

14. Appareil de coupe sous-jacente et d'arrachage de mottes racinaires selon la revendication 13, **caractérisé en ce que** l'unité de guidage linéaire (4) est disposée sur un élément porteur (2) qui présente au moins un élément d'accouplement (3) qui est conçu pour l'accouplement mécanique, hydraulique et/ou électrique de l'appareil de coupe sous-jacente et d'arrachage de mottes racinaires (1) à un véhicule porteur.

15. Procédé destiné aux pépinières, au jardinage et à l'aménagement paysager ainsi qu'à la sylviculture, pour la coupe sous-jacente et l'arrachage de plantes avec des mottes racinaires, comprenant les étapes consistant à :
- accoupler à un véhicule porteur un appareil de coupe sous-jacente et d'arrachage de mottes racinaires (1, 5) selon l'une des revendications précédentes équipé de deux lames de coupe sous-jacente (11, 21),
- régler l'inclinaison des lames de coupe sous-jacente (11, 21) en fonction de la profondeur de la motte racinaire à arracher,
- régler l'espacement des lames de coupe sous-jacente (11, 21) en fonction de la largeur de la motte racinaire à arracher,
- faire pivoter les lames de coupe sous-jacente (11, 21) dans une position approximativement horizontale, les lames de coupe sous-jacente (11, 21) formant un U ouvert vers la plante à arracher,
- approcher l'appareil de coupe sous-jacente et d'arrachage (1, 5) de la plante à arracher,
- faire pivoter les lames de coupe sous-jacente (11, 21) vers le bas et ensuite, en maintenant le mouvement de pivotement, vers le haut jusque dans une position approximativement horizontale,
- refaire pivoter les lames de coupe sous-jacente (11, 21) vers le bas jusque dans une position verticale,
- soulever l'appareil de coupe sous-jacente et d'arrachage de mottes racinaires (1, 5) avec la plante et sa motte racinaire et
- évacuer la plante et sa motte racinaire.
